(19) Europäisches Patentamt
European Patent Office
Office européen des brevets

(11) **EP 4 050 919 A1**

(12) **EUROPEAN PATENT APPLICATION**
published in accordance with Art. 153(4) EPC

(43) Date of publication:
**31.08.2022 Bulletin 2022/35**

(21) Application number: **20880617.4**

(22) Date of filing: **21.10.2020**

(51) International Patent Classification (IPC):
***H04W 4/46*** (2018.01)

(86) International application number:
**PCT/CN2020/122525**

(87) International publication number:
**WO 2021/083009 (06.05.2021 Gazette 2021/18)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **28.10.2019 CN 201911027680**

(71) Applicant: **Xidian University**
**Xi'an, Shaanxi 710071 (CN)**

(72) Inventors:
• **YUE, Peng**
**Xi'an, Shaanxi 710071 (CN)**

• **ZHANG, Hailin**
**Xi'an, Shaanxi 710071 (CN)**
• **ZHU, Huiling**
**Canterbury Kent CT2 7NT (GB)**
• **CHENG, Wenchi**
**Xi'an, Shaanxi 710071 (CN)**
• **WANG, Jiangzhou**
**Canterbury Kent CT2 7NT (GB)**
• **CAI, Lin**
**Xi'an, Shaanxi 710071 (CN)**
• **CHENG, Wenyu**
**Xi'an, Shaanxi 710071 (CN)**

(74) Representative: **Koch, Bertram**
**Koch Müller**
**Patentanwaltsgesellschaft mbH**
**Maaßstraße 32/1**
**69123 Heidelberg (DE)**

(54) **MOBILE WIRELESS COMMUNICATION NETWORK AND ROUTING METHOD THEREOF**

(57)     The present invention relates to a mobile wireless communication network and a routing method therefor. The network comprises: a plurality of first communication nodes, a plurality of second communication nodes and a control node; the plurality of first communication nodes with fixed positions form a first communication network with a stable structure; a plurality of second communication nodes with movable positions form a second communication network with a dynamically changing structure; the first communication network is configured as a destination network for routing; and the second communication network is configured as a source network and a relay network for routing. The embodiments of the present invention can simplify the topological structure of the whole network, improve the structural stability of the network, reduce the end-to-end time delay of information transmission, and thus improve the timeliness and reliability of network data communication, especially suitable for emergency communications for sudden disasters in complex geological areas.

FIG.1

## Description

## FIELD OF THE INVENTION

The present invention relates to communication technology, particularly to a mobile wireless communication network and a routing method therefor.

## BACKGROUND

Mobile wireless communication networks include regional ad hoc networks that have dynamic and flexible networking modes and broad applications. One of the applications is to satisfy emergency communication demands in complex geological areas when major sudden disasters occur. When major disasters such as catastrophic earthquake, floods, debris flows and fires occur, communication facilities are often destroyed, and communications are interrupted and difficult to recover in short time, which will decrease the effects of emergency response to sudden events and result in further loss of manpower and material resources. Therefore, before implementing rescue, it is necessary to explore the environment to figure out target points to be rescued, which requires to establish an emergency communication network based on a regional mobile ad hoc network.

The regional mobile ad hoc communication network is directed to the network communication between mobile terminals such as mobile vehicles, persons and portable devices, in a certain region. The main characteristics of this type of network includes continuous mobility of terminals, fast variability of network topologies and burstiness of communication traffic. Since the regional mobile ad hoc communication network can support mobile terminals in the network communication range to automatically join in the network and communicate with other terminals within the range, the network communication has wide application prospect and demands in many fields such as automobile traffic, space networking and military. For example, the United States has proposed an adaptive comprehensive communication (mosale) plan which utilizes the ad hoc network technology. In the plan, communication air node (CAN) technology project funded by DARRA and several technologies proposed by the research and development center of CECOM are combined together, to demonstrate mobile communications and form a seamless communication architecture desired in future battlefield. A traffic induction system (TSSN) has been proposed in 2014 by Huazhong University of Science and Technology in China; in the system, a vehicle is a node in which an embedded navigator capable of displaying traffic jams is installed, and multiple vehicles form ad hoc network to enable road information sharing and avoiding traffic jams. However, since the regional mobile ad hoc communication network terminals have continuous mobility, the above mentioned methods have defects of complex and unstable network topologies, complex networking protocol and data routing, low reliability of communications and large end-to-end delay. Therefore, how to effectively respond to sudden events and establish an emergency communication network with satisfied performance requirements has become an urgent issue.

## SUMMARY OF THE INVENTION

The object of the present invention is to propose a mobile wireless communication network and a routing method therefor to overcome at least one problem with the above-stated prior art.

An embodiment of the present invention provides a mobile wireless communication network. The mobile wireless communication network comprises: a plurality of first communication nodes, a plurality of second communication nodes and a control node; wherein the plurality of first communication nodes, the plurality of second communication nodes and the control node are movable wireless communication devices; in case that the control node is located at a fixed position and the plurality of first communication nodes are located at any fixed positions within a communication range of the control node, the plurality of first communication nodes form a first communication network; and the plurality of second communication nodes are freely movable and form a second communication network; wherein any one of the plurality of first communication nodes is configured to communicate with the control node and other first communication nodes within its communication range over the first communication network; any one of the plurality of second communication nodes is configured to communicate with other second communication nodes within its communication range over the second communication network; wherein the first communication network is configured as a destination network for routing; and the second communication network is configured as a source network and a relay network for routing.

Another embodiment of the present invention provides a routing method for a mobile wireless communication network, wherein the mobile wireless communication network comprises at least a plurality of first communication nodes and a plurality of second communication nodes; the plurality of first communication nodes and the plurality of second communication nodes are movable wireless communication devices, wherein the plurality of first communication nodes form a first communication network when they are located at fixed positions; and the plurality of second communication nodes are freely movable and form a second communication network; the method comprises: configuring the first communication network as a destination network of a route; and configuring the second communication network as a source network and a relay network for routing.

## BRIEF DESCRIPTION OF DRAWINGS

Fig. 1 is a topology diagram of a mobile wireless communication network in accordance with an embodiment of the present invention;

Fig. 2 is a structure diagram of a first communication network 110 shown in Fig. 1;

Fig. 3 is a structure diagram of a second communication network 120 shown in Fig. 1;

Fig. 4 is a flow chart of a network routing method in accordance with an embodiment of the present invention;

Fig. 5 is a sub-flowchart about updating information as shown in Fig. 4; and

Fig. 6 is a sub-flowchart about the source node selecting path as shown in Fig. 4.

## DETAILED DESCRIPTION

Embodiments of the present invention will be further described in detail below with reference to drawings.

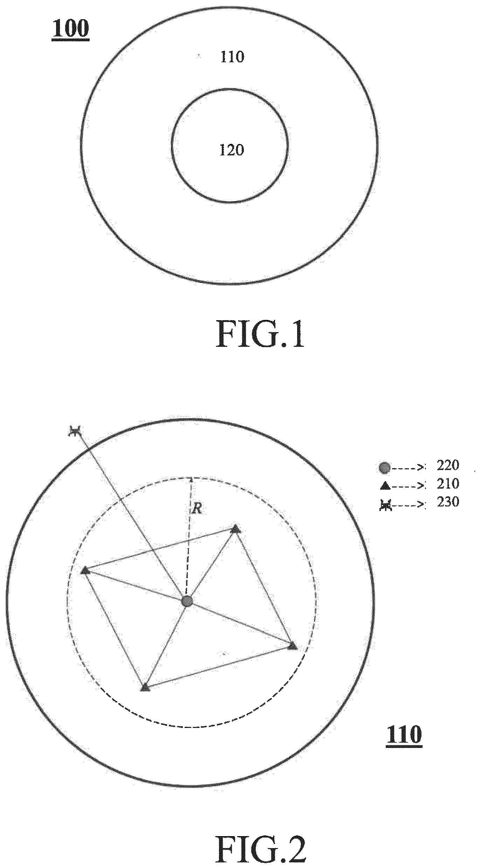

Fig. 1 shows a topology diagram of a mobile wireless communication network 100 in accordance with an embodiment of the present invention. The mobile wireless communication network 100 includes: a plurality of first communication nodes, a plurality of second communication nodes and a control node which are movable wireless communication devices; in case that the control node is located at a fixed position and the plurality of first communication nodes are located at arbitrary fixed positions within the communication range of the control node, the plurality of first communication nodes form a first communication network 110; and the plurality of second communication nodes are freely movable and form a second communication network 120; wherein, any one of the plurality of first communication nodes is configured to communicate with the control node and other first communication nodes located within its communication range over the first communication network 110; and any one of the plurality of second communication nodes is configured to communicate with other second communication nodes within its communication range over the second communication network 120. The first communication network 110 is configured as a destination network for routing; and the second communication network 120 is configured as a source network and a relay network for routing.

The topology structure of the entire network 100 is divided into two layers. Each first communication node may be fixed at any location within the communication range of the control node, to communicate with the control node and other first communication nodes located within its communication range, thereby forming a relatively stable first communication network 110. The second communication network 120 is located at the periphery of the first communication network 110. Each second communication node may continuously change its position and move in a random direction, and may communicate with other second communication nodes located within its communication range, so as to form a dynamically variable second communication network 120. The second communication network 120 is configured as the source network and relay network for routing, such that second communication nodes therein can operate as source nodes. At least one second communication node can operate as a relay node and have relay routing function, and as long as its geographic location is within the communication range of a first communication node, it can communicate with the first communication node and transmit information collected by the second communication node to the first communication node.

In embodiments of the present invention, the control node is configured to wirelessly communicate with onboard communication devices on drones flying in air and can wirelessly communicate with any one of the plurality of first communication nodes. The control node is also referred to as a control seat, can control the first communication network and in turn control the second communication network, so as to control the operation of the overall mobile wireless communication network 100. The control node is not limited to communications with the drones, and can also wirelessly communicate with other communication nodes located outside of the network 100 and mounted on various vehicles.

In embodiments of the present invention, each first communication node and the control node are communication devices installed on vehicles. The first communication node may be referred to as a vehicle-mounted node, and the first communication network consisting of a plurality of first communication nodes may be referred to as a vehicle-mounted network. Each second communication node may be backpacked or hand-held by a single person or robot. The second communication node may be referred to as a single-node, and the second communication network consisting of a plurality of second communication nodes may also be referred to as a single network. While some of the following embodiments of the present invention describe the first communication node as vehicle-mounted nodes and the second communication node as a single-node, the present invention is not limited thereto. The first communication nodes may be installed on other various vehicles, such as ships, and move to proper locations to constitute the first communication network. The second communication nodes may also be mounted on various vehicles to freely move and constitute the second communication network.

In embodiments of the present invention, the communication range of the first communication node is wider than that of the second communication node. The communication range refers to the maximum transmission distance within which nodes can communicate with each other. For example, since communication devices of the first communication nodes are installed on vehicles, and communication devices of the second communication nodes may be backpack or hand-held by persons, the communication device of the second communication node has limited energy, and the first communication node usually has higher communication power than that of the second communication node, and thus has higher information transmission and reception capability in a greater geographical range. Each first communication node can communicate with other first communication nodes located within its communication range.

In embodiments of the present invention, a destination node for routing is defined as any of the first communication nodes, a relay node for routing is defined as a second communication node located within the communication range of the first communication network 110, and a source node for routing is defined as a second communication node that is located outside of the first communication network 110 and has a communication range within which the relay node exists.

According to embodiments of the present invention, it is possible to change the characteristic that all nodes in the regional mobile ad hoc communication network of prior art can move freely; in the entire network 100, only the second communication nodes, such as single-nodes, are capable of freely moving, while the first communication nodes, such as vehicle-mounted nodes, are located at fixed positions, thereby constituting an ad hoc network including a first communication network with stable structure and a second communication network with dynamically variable structure, which simplifies the complexity of topology of the entire network 100 and improves structure stability of the entire network 100.

In accordance with embodiments of the present invention, since the entire wireless communication network 100 is divided into two layers of networks, i.e., the first communication network 110 and the second communication network 120; the first communication network 110 with stable structure is used as the destination network for routing, and the second communication network 120 with dynamically variable structure is used as the source network and the relay network for routing, so that the division of their functions is clear and each source node may correspond to a plurality of destination nodes, thereby improving the selectability of destination nodes, and effectively alleviating the phenomenon of large end-to-end delay due to information jams occurring when only one destination node is provided.

In accordance with embodiments of the present invention, since a plurality of first communication nodes can serve as destination nodes and are located at fixed positions, when a second communication node is forced to exit the network due to its continually varying positions and insufficient energy, and cannot interact with other nodes, this second communication node can return timely and safely to the first communication network 110 with stable structure, and supplement energy or urgently transfer in an emergency. Therefore, embodiments of the present invention are especially applicable to emergency communications in certain regions. For example, while exploring in geological disaster regions, complex topography regions or unknown topography regions, the mobile wireless communication network can satisfy demands of communications between the information command center and explorers, and communications between explorers.

Fig. 2 is a structure diagram of a first communication network 110 according to an embodiment of the present invention. The first communication network 110 may include N vehicle-mounted nodes 210 and a control node 220, each of them has a communication range of R, where N>0, and R>0. In Fig. 2, one circular node in the center is the control node 220, one node at the upper-left position outside of the solid line circle is a drone 230, and four triangular nodes inside the dashed line circle are vehicle-mounted nodes 210, i.e., N=4. After these vehicle-mounted nodes 210 and the control node 220 move to a certain region such as a disaster region, the unique control node 220 is fixed at a certain position in the region and is used for communicating with the corresponding drone 230 in the air; each vehicle-mounted node 210 is randomly fixed at arbitrary position within the communication range of the control node 220 to communicate with the control node 220 and other vehicle-mounted nodes within the communication range; and positions of the control node 220 and vehicle-mounted nodes 210 are fixed, thereby forming a relatively stable first communication network 110. The vehicle-mounted nodes 210 in the first communication network 110 may be communication devices which are mounted on vehicles and used for information interaction. The control node 220 may be a communication device which can communicate with all vehicle-mounted nodes 210, command operations of the entire network 100 and perform information interaction with a drone network in the air or other communication network in the air. The communication device as the control node 220 may be installed on a vehicle.

In one example, the first communication network 110 may collect information about certain regions (such as disaster information) through respective first communication nodes 210 and transmit the information to the control node 220. The control node 220 transmits the information to the drone 230, and then the drone 230 transmits the information to a high level information center, such as the disaster command center, via an air communication network. The control node 220 may arrange the fixed position of every first communication node 210, and times when the second communication nodes are required to return, transfer or supplement energy. The control node 220 may basically control the deployment of the entire network 100.

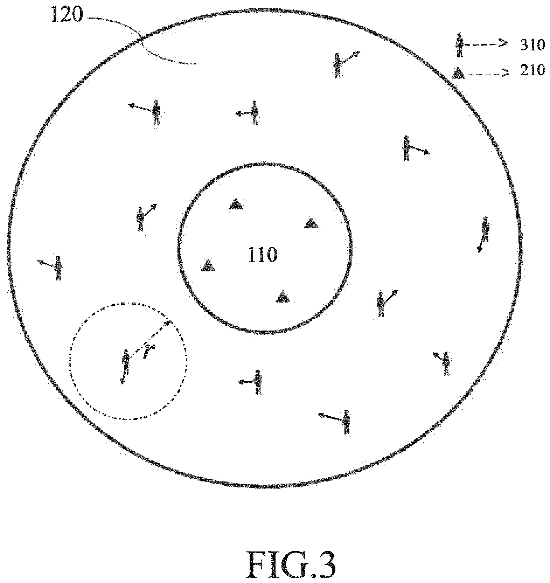

Fig. 3 is a structure diagram of a second communication network 120 according to an embodiment of the present invention. As shown in Fig. 3, four triangular nodes inside the inner circle are vehicle-mounted nodes 210, which constitute the first communication network 110. The human shape nodes shown in Fig. 3 are single-nodes 310. The second communication network 120 between the outer circle and the inner circle may include a plurality of single-nodes 310. For example, when N vehicles carry N vehicle-mounted nodes, and each vehicle carries A persons equipped with communication devices, the number of single-nodes is A*N. The communication range of a single-node 310 is $r$, where A>0, r>0 and r<R. All of single-nodes 310 are located outside of the periphery of the first communication network 110 (also known as vehicle-mounted network), move in random directions, and their positions change over time. Any single-node 310 can communicate with other single-nodes within its communication range, because their positions are not fixed, thereby forming a dynamically varying second communication network (also known as a single-network) 120. Thus, the entire network 100 is divided into two layers of networks, i.e., the first communication network 110 and the second communication network 120. A single-node 310 includes a single-backpack node and a single-hand-held node. The single-backpack-node refers to a single person or robot that carries a backpack containing a communication device capable of performing information interaction with vehicle-mounted nodes and single-nodes and having limited energy. The single-hand-held node refers to a single person or robot that holds a communication device in hand capable of performing information interaction with vehicle-mounted nodes and single-nodes and having limited energy. Each single-node can communicate with other single-nodes located within its communication range, and a vehicle-mounted node 210 can communicate with single-nodes 310 within it communication range.

It is noted that the numbers of the first communication nodes, the second communication nodes and the control nodes are not limited in the present invention.

Another embodiment of the present invention provides a routing method for a mobile wireless communication network. The mobile wireless communication network includes at least a plurality of first communication nodes and a plurality of second communication nodes that are movable wireless communication devices, wherein the plurality of first communication nodes form a first communication network while they are located at fixed positions; and the plurality of second communication nodes are freely movable and form a second communication network. The routing method includes steps of: configuring the first communication network as a destination network for routing, and configuring the second communication network as a source network and a relay network for routing.

By use of the routing method for the mobile wireless communication network according to an embodiment of the present invention, since the network is optimized in terms of the end-to-end delay of the two-hop network rather than optimizing the entire network, as compared to the search distance of an one-hop network, the involved two-hop network has longer search distance, and can explore and obtain more abundant information; and as compared to information transmission of a network with three or more hops, the involved two-hop network spends shorter time for transmitting messages with lower bit error rate. Therefore, by reducing end-to-end delay of information transmission through the two-hop network, data can be transmitted timely and reliably from the source node to the destination node, so as to ensure timely and smooth communications of the entire network. For example, in a disaster region, through the two layers of networks of the mobile wireless communication network, it is possible to timely feedback general situations of the region, such as the data about the degree of the disaster, the complexity of the topography and the estimated number of trapped persons, etc., to the information command center and relevant rescue units, to improve rescue efficiency.

In embodiments of the present invention, the plurality of first communication nodes are communication devices mounted on vehicles, the plurality of second communication nodes are backpack or hand-held communication devices, and the communication range of the first communication node is wider than that of the second communication node.

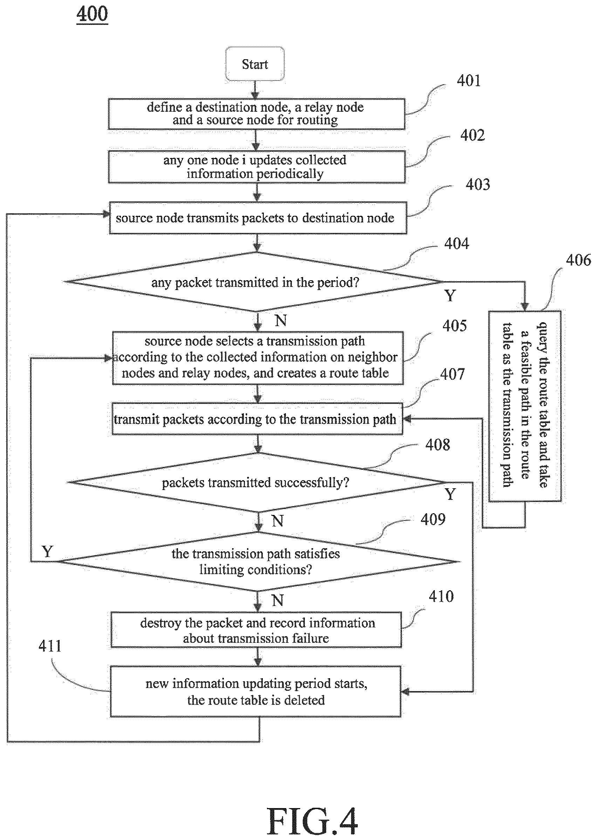

Fig. 4 shows a flow chart of a network routing method according to an embodiment of the present invention. In the embodiment, the network routing method 400 includes:

step (401): defining a destination node, a relay node and a source node for routing. In one example, the destination node for routing is defined as any one of the first communication nodes, the relay node for routing is defined as a second communication node located within the communication range of the first communication network, and the source node for routing is defined as a second communication node which is located outside of the communication range of the first communication network and has a communication range within which a relay node exists.

In an embodiment of the present invention, the method 400 further includes:

step (402): any node $i$ updates collected information periodically. In one example, any node $i$ of the plurality of first communication nodes and the plurality of second communication nodes broadcasts messages periodically over a wireless channel, collects information on neighbor nodes and relay nodes which are located within the communication range of this any node, and when a new information updating period starts, clears the information on neighbor nodes and relay nodes which were collected last time.

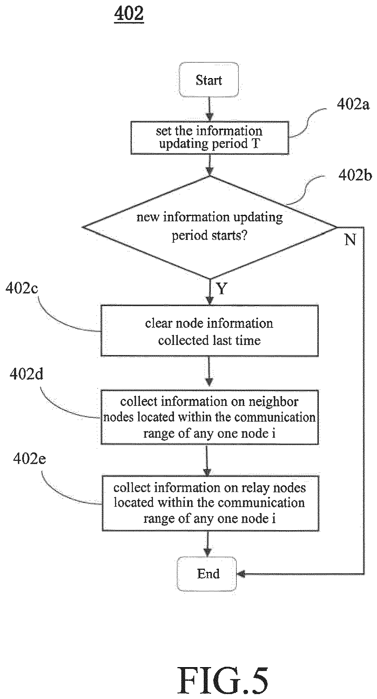

Fig. 5 shows a flow chart of an implementation of the updating step (402) as shown in Fig. 4. In this implementation, step (402) includes:

step (402a): setting an information updating period $T$, and $T>0$.

The information updating period $T$ indicates that whenever time $T$ passes, the node $i$ will update information once and collect information on neighbor nodes and relay nodes within the communication range of the node $i$ again.

Step (402b): determining whether the new information updating period starts; if so, executing step (402c); and if not, ending the information updating process.

Step (402c): clearing the node information collected last time.

The information collected by the node will be held until the new information updating period starts. Since the node has limited storage space and the collected node information is partly invalid already, when the new information updating period starts, it is necessary to clear the node information collected last time and release the storage space for storing more accurate node information.

Step (402d): collecting information on neighbor nodes located within the communication range of the any one node $i$.

In one example, the collected information on neighbor nodes includes the distance $d_1$ from the node $i$ to neighbor nodes, respective arrival strength $\lambda$ and processing strength $\mu$ of neighbor nodes, channel conditions $g_1$ and estimated transmission rate $C_1$ from the node $i$ to neighbor nodes, where $C_1$ is calculated by the following equation:

$$C_1 = B \cdot \log_2\left(1 + \frac{E_b \cdot g_1}{N_0}\right),$$

where $E_b$ denotes the energy per bit under the given transmission power, $B$ denotes the transmission bandwidth of the node $i$, $N_0$ denotes bilateral power spectral density of narrow-band Gaussian noise, and the distance $d_1$, and the channel conditions $g_1$ are collected by the physical layer of the node.

The neighbor node may receive, from peripheral nodes, data packets to be forwarded, obtain the probability of an occurrence of the packets received by the neighbor node according to statistical information of the physical layer; the distribution of the probability complies with the rule of Poisson stream, and the arrival strength of the neighbor node is $\lambda$. Data packets have different sizes, thereby resulting in different processing time for each packet. It is deduced from the statistical information of the physical layer that times for processing packets by the neighbor node follow an exponential distribution; and the processing strength of packets by the neighbor node is $\mu$.

In one example, the second communication nodes are set to process only one packet at the same time. That is, the second communication nodes are a single-service-station and infinite-source system. The system is set as a stable system, so it is required to satisfy

$$\frac{\lambda}{\mu} < 1.$$

Step (402e): collecting information on relay nodes located within the communication range of any one node $i$.

In one example, the collected information on relay nodes includes the distance $d_2$ from the relay node to any first communication node, the channel conditions $g_2$ and the estimated transmission rate $C_2$, where, $C_2$ is calculated by the following equation:

$$C_2 = B \cdot \log_2\left(1 + \frac{E_b \cdot g_2}{N_0}\right).$$

If a relay node cannot communicate with a certain first communication node, all of the distance, the channel condition and the estimated transmission rate are denoted as $\infty$; and if a relay node is not within the communication range of a certain first communication node, it indicates that these two nodes cannot communicate with each other.

The method 400 as shown in Fig. 4 further includes:

step (403): transmitting packets from the source node to the destination node. The source node can transmit packets of any sizes to the destination node at any time.

Step (404): when the source node is transmitting packets to the destination node, determining whether the source node has transmitted packets within the information updating period of the source node, and executing step (405) if not; and executing step (406) if so.

Step (405): according to the collected information on neighbor nodes and the information on relay nodes, selecting, by the source node, a route, and creating a route table.

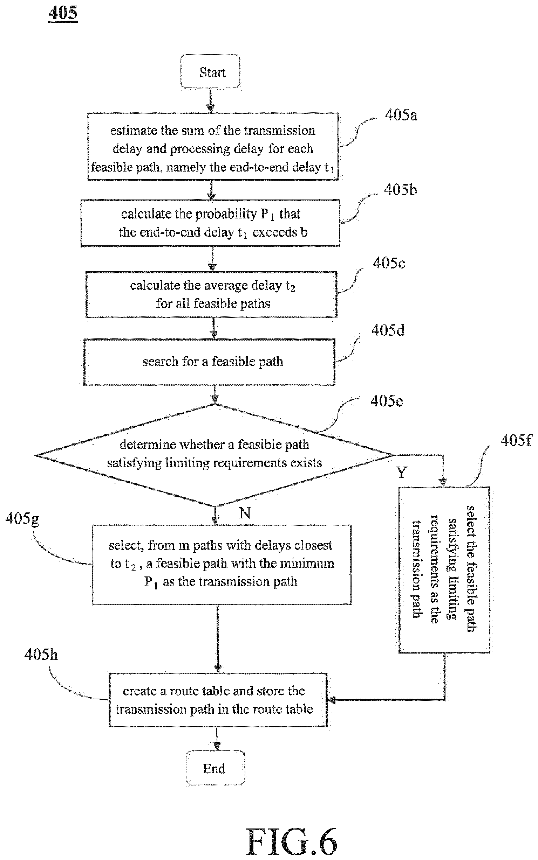

Fig. 6 shows an implementation of the step (405) of selecting a transmission path by the source node as shown in Fig. 4. In this implementation, step (405) includes:

step (405a): estimating the sum of the transmission delay transmission and the processing delay $t_{processing}$ for each feasible path, and obtaining the end-to-end delay $t_1$;

In one example, the feasible path as stated in step (405a) indicates a transmission solution consisting of a source node, a relay node within the communication range of the source node, and a destination node at a distance of not being $\infty$ from the relay node.

Step (405b): calculating the probability $P_1$ that the end-to-end delay $t_1$, exceeds b, where b denotes a constant;

Step (405c): calculating the average delay $t_2$ of all feasible paths;
Step (405d): searching for a feasible path;
Step (405e): determining whether a feasible path satisfying limiting requirements exists;

First case: if searching out one feasible path which satisfies the limiting requirements ($t_1 < e \cdot t_2$, $e > 0$ and $P_1 < f\%$, $0 < f < 100$), selecting the feasible path as the transmission path (step 405f); and then executing step (405h);

Second case: if no feasible path satisfying the limiting requirements ($t_1 < e \cdot t_2$, $e > 0$ and $P_1 < f\%$, $0 < f < 100$) is searched, selecting, from $m$ paths with delays closest to $t_2$, a feasible path with the minimum $P_1$, as the transmission path (step 405g), where m $\geq$ 1; and then executing step (405h);

Step (405h): creating a route table and storing the selected transmission path in the route table; and then executing step (407).

In embodiments of the present invention, parameters in step (405) may be calculated by the following formulas:

the transmission delay: $t_{transmission} = (d_1/C_1) + (d_2/C_2)$, where $d_1$ denotes the transmission distance from the source node to the relay node, $C_1$ denotes the estimated transmission rate from the source node to the relay node, $d_2$ denotes the transmission distance from the relay node to the destination node, and $C_2$ denotes the estimated transmission rate from the relay node to the destination node;

the processing delay: $t_{processing} = 1/(\mu - \lambda)$, where $\lambda$ denotes the arrival strength of the relay node, and $\mu$ denotes the processing strength of the relay node;

the probability that the end-to-end delay $t_1$, exceeds b: $P_1 = e^{-b(\mu-\lambda)}$, where $t_1 = t_{transmission} + t_{processing}$, b denotes a constant; and

$$t_2 = \frac{\sum_{q=1}^{l} t_1}{l}$$

the average delay: , where $l$ denotes the total number of feasible paths.

The method 400 as shown in Fig. 4 further includes:

Step (406): querying the route table of the source node, and selecting a unique feasible path in the route table as the transmission path.

Step (407): transmitting packets according to the transmission path. In one example, packets sent by the source node is transmitted according to the transmission path selected in step (405) or step (406).

Step (408): determining whether packets sent by the source node are successfully transmitted, if not, executing step (409) to determine whether the transmission path is obtained in the first case, i.e., whether the transmission path satisfies the limiting conditions $t_1 < e \cdot t_2$, $e > 0$ and $P < f\%$, $0 < f < 100$; and if so, deleting the route table created in step (405), and returning to step (405) to continue searching for a feasible path; and if the transmission path is obtained in the second case, i.e., it does not satisfy the above-stated limiting conditions, destroying the packet and recording the information about transmission failure (step 410). When it is determined that packets sent by the source node are transmitted successfully, step (411) is executed.

Step (411): when a new information updating period for the source node starts, deleting the route table established by the source node, i.e., the route table created in step (405), returning to step (403) and waiting for the source node to transmit packets again.

The above-stated embodiments of the present invention aims at providing a two-hop network, under the condition of second communication nodes having limited energy, an optimum transmission path is selected for transmitting packets, by comprehensively considering the transmission delay due to different channel conditions of feasible paths and the processing delay due to processing packets at relay nodes, thereby reducing end-to-end delay of information transmission and improving the timeliness and reliability of the network data communication.

The above-stated are merely preferred embodiments of the present invention, and are not intended to limit the present invention. After those skilled in the art understand contents and principles of the present invention, they can make various modifications and variations in forms and details, without departing from the principles and structures of the present invention. However, these modifications and variations based on the spirit of the present invention still fall within the scope of the appended claims of the patent.

**Claims**

1. A mobile wireless communication network comprising: a plurality of first communication nodes, a plurality of second communication nodes and a control node;

wherein the plurality of first communication nodes, the plurality of second communication nodes and the control node are movable wireless communication devices;

in case that the control node is located at a fixed position and the plurality of first communication nodes are located at any fixed positions within a communication range of the control node, the plurality of first communication nodes form a first communication network; and the plurality of second communication nodes are freely movable and form a second communication network;

wherein any one of the plurality of first communication nodes is configured to communicate with the control node and other first communication nodes within its communication range over the first communication network; any one of the plurality of second communication nodes is configured to communicate with other second communication nodes within its communication range over the second communication network; wherein the first communication network is configured as a destination network for routing; and the second communication network is configured as a source network and a relay network for routing.

2.   The mobile wireless communication network of claim 1, wherein the control node is configured to wirelessly communicate with a drone flying in air and any one of the plurality of first communication nodes, and control operations of the mobile wireless communication network.

3.   The mobile wireless communication network of claim 1, wherein the plurality of first communication nodes and the control node are communication devices installed on vehicles; and the plurality of second communication nodes are backpack or hand-held communication devices.

4.   The mobile wireless communication network of claim 1, wherein communication range of the first communication node is larger than that of the second communication node.

5.   The mobile wireless communication network of any one of claims 1 to 4, wherein a destination node for routing is defined as any one of the first communication nodes, a relay node for routing is defined as the second communication node located within the communication range of the first communication network, and a source node for routing is defined as the second communication node which is located outside of the communication range of the first communication network and has a communication range in which a relay node exists.

6.   A routing method for a mobile wireless communication network, wherein the mobile wireless communication network comprises at least a plurality of first communication nodes and a plurality of second communication nodes; the plurality of first communication nodes and the plurality of second communication nodes are movable wireless communication devices, wherein the plurality of first communication nodes form a first communication network when they are located at fixed positions; and the plurality of second communication nodes are freely movable and form a second communication network; the method comprises:

configuring the first communication network as a destination network of a route; and configuring the second communication network as a source network and a relay network for routing.

7.   The method of claim 6, wherein the plurality of first communication nodes are communication devices installed on vehicles, the plurality of second communication nodes are backpack or hand-held communication devices; wherein the communication range of the first communication node is wider than that of the second communication node.

8.   The method of claim 6, further comprising:
step (1): defining a destination node for routing as any one of the first communication nodes; defining a relay node for routing as the second communication node located within the communication range of the first communication network, and defining a source node for routing as the second communication node which is located outside of the communication range of the first communication network and has a communication range in which a relay node exists.

9.   The method of claim 8, further comprising:

step (2): broadcasting, by any node of the plurality of first communication nodes and the plurality of second communication nodes, messages periodically over a wireless channel; collecting information on neighbor nodes and relay nodes which are located within the communication range of this any node; and when a new information updating period starts, clearing the information on the neighbor nodes and the relay nodes which were collected last time; step (3): transmitting, by the source node, packets to the destination node; determining whether the source node has not transmitted packets during the current information updating period, and executing step (4) if so; and executing step (5) if not; step (4): selecting, by the source node, a route according to the collected information on the neighbor nodes and the information on the relay nodes, comprising:

step (4a): estimating a sum of a transmission delay $t_{transmission}$ and a processing delay $t_{processing}$ for each feasible path and obtaining an end-to-end delay $t_1$; step (4b): calculating a probability $P_1$ that the end-to-end delay $t_1$ exceeds b, where b denotes a constant;

step (4c): calculating an average delay $t_2$ of all feasible paths;

step (4d): searching for a feasible path:

a first case: if searching a feasible path which satisfies: $t_1 < e \cdot t_2$, $e > 0$ and $P_1 < f\%$, $0 < f < 100$, selecting the feasible path as a transmission path and executing step (4e);

a second case: if not searching a feasible path which satisfies: $t_1 < e \cdot t_2$, $e > 0$ and $P_1 < f\%$, $0 < f < 100$, selecting a feasible path with a minimum $P_1$, from $m$ paths with delays closest to $t_2$, as a transmission path, and executing step (4e); where $m \geq 1$;

step (4e): creating a route table and storing the selected transmission path in the route table, and executing step (6);

step (5): querying the route table of the source node, and selecting a unique feasible path in the route table as the transmission path;

step (6): transmitting packets according to the transmission path; determining whether the packets are successfully transmitted; if not, determining whether the transmission path is obtained in the first case, if so, deleting the route table created in step (4e), and returning to step (4d) to continue searching for a feasible path; and if the transmission path is obtained in the second case, destroying the packets and recording information on the transmission failure;

step (7): when a new information updating period starts, deleting the route table which is established by the source node and created in step (4e), and returning to step (3).

10. The method of claim 9, wherein the information, collected in step (2), on neighbor nodes which are located within the communication range of the any node $i$ comprises: a distance $d_1$, from the node $i$ to each neighbor node, an arrival strength $\lambda$ and a processing strength $\mu$ of each neighbor node, channel conditions $g_1$ and estimated transmission rate $C_1$ from the node $i$ to each neighbor node;

where $C_1$ is calculated by the following formula:

$$C_1 = B \cdot \log_2 \left(1 + \frac{E_b \cdot g_1}{N_0}\right)$$

where $E_b$ denotes energy per bit under a given transmission power, $B$ denotes a transmission bandwidth of the node $i$, and $N_0$ denotes a bilateral power spectral density of narrow-band Gaussian noise.

11. The method of claim 9, wherein the information, collected in step (2), on relay nodes which are located within the communication range of the any one node $i$ comprises: a distance $d_2$, channel conditions $g_2$ and estimated transmission rate $C_2$ from the relay node to any one of the first communication nodes;

where $C_2$ is calculated by the following formula:

$$C_2 = B \cdot \log_2 \left(1 + \frac{E_b \cdot g_2}{N_0}\right)$$

where $E_b$ denotes energy per bit under a given transmission power, $B$ denotes a transmission bandwidth of the node $i$; and $N_0$ denotes a bilateral power spectral density of narrow-band Gaussian noise; wherein if the relay node cannot communicate with a certain one of the first communication nodes, all of the distance $d_2$, the channel conditions $g_2$ and the estimated transmission rate $C_2$ are denoted as $\infty$.

12. The method of claim 9 or 11, wherein the feasible path stated in step (4a) indicates a transmission solution consisting of one source node, one relay node located within the communication range of the source node, and a destination node with a distance from the relay node not being $\infty$.

13. The method of claim 9, wherein parameters stated in step (4) are calculated by the following formulas:

the transmission delay: $t_{transmission} = (d_1/C_1) + (d_2/C_2)$,

where $d_1$, denotes the transmission distance from the source node to the relay node, $C_1$ denotes the estimated transmission rate from the source node to the relay node, $d_2$ denotes the transmission distance from the relay node to the destination node, and $C_2$ denotes the estimated transmission rate from the relay node to the destination node;

the processing delay: $t_{processing} = 1/(\mu - \lambda)$,

where $\lambda$ denotes the arrival strength of the relay node, and $\mu$ denotes the processing strength of the relay node;

the probability that the end-to-end delay $t_1$, exceeds b: $P_1 = e^{-b(\mu - \lambda)}$,

where $t_1 = t_{transmission} + t_{processing}$, b denotes a constant; and

the average delay: $t_2 = \dfrac{\sum_{q=1}^{l} t_1}{l}$ , where $l$ denotes the total number of feasible paths.

FIG.1

FIG.2

FIG.3

<u>400</u>

```
                    ┌─────────┐
                    │  Start  │
                    └─────────┘
                         │
                         ▼
        ┌──────────────────────────────────┐      401
        │ define a destination node, a relay node │
        │    and a source node for routing        │
        └──────────────────────────────────┘
                         │
                         ▼                         402
        ┌──────────────────────────────────┐
        │    any one node i updates collected     │
        │       information periodically          │
        └──────────────────────────────────┘
                         │
                         ▼                         403
        ┌──────────────────────────────────┐
        │ source node transmits packets to destination node │
        └──────────────────────────────────┘
```

404

any packet transmitted in the period? — Y → 406

406: query the route table and take a feasible path in the route table as the transmission path

N

405

source node selects a transmission path according to the collected information on neighbor nodes and relay nodes, and creates a route table

407

transmit packets according to the transmission path

408

packets transmitted successfully? — Y

N

409

the transmission path satisfies limiting conditions? — Y

N

410

destroy the packet and record information about transmission failure

411

new information updating period starts, the route table is deleted

FIG.4

<u>402</u>

```
            ┌─────────┐
            │  Start  │
            └────┬────┘
                 │                      402a
       ┌─────────▼─────────┐        ⟍
       │ set the information│
       │  updating period T │
       └─────────┬─────────┘
                 │                      402b
                 │                  ⟍
            ◇──────────◇
           ╱            ╲
          ╱ new information ╲
         ◇  updating period  ◇────── N ─────┐
          ╲  starts?        ╱                │
           ╲              ╱                  │
            ◇──────────◇                     │
                 │ Y                         │
   402c          │                          │
      ⟍   ┌──────▼───────────┐              │
          │ clear node information          │
          │  collected last time │          │
          └──────┬───────────┘              │
   402d          │                          │
      ⟍   ┌──────▼─────────────────┐        │
          │ collect information on neighbor  │
          │ nodes located within the         │
          │ communication range of any one   │
          │ node i                           │
          └──────┬─────────────────┘        │
   402e          │                          │
      ⟍   ┌──────▼─────────────────┐        │
          │ collect information on relay      │
          │ nodes located within the         │
          │ communication range of any one   │
          │ node i                           │
          └──────┬─────────────────┘        │
                 │                          │
            ┌────▼────┐                     │
            │   End   │◄────────────────────┘
            └─────────┘
```

# FIG.5

405

```
                    ┌─────────┐
                    │  Start  │
                    └────┬────┘
                         │
                         ▼
    ┌──────────────────────────────────────┐
    │  estimate the sum of the transmission │        405a
    │   delay and processing delay for each │
    │ feasible path, namely the end-to-end delay $t_1$ │
    └──────────────────┬───────────────────┘
                       │
                       ▼
    ┌──────────────────────────────────────┐
    │    calculate the probability $P_1$ that │        405b
    │    the end-to-end delay $t_1$ exceeds b │
    └──────────────────┬───────────────────┘
                       │
                       ▼
    ┌──────────────────────────────────────┐
    │     calculate the average delay $t_2$   │        405c
    │        for all feasible paths          │
    └──────────────────┬───────────────────┘
                       │
                       ▼
    ┌──────────────────────────────────────┐
    │       search for a feasible path       │        405d
    └──────────────────┬───────────────────┘
```

determine whether a feasible path
satisfying limiting requirements exists                405e

405f

Y

N

405g

select, from m paths with delays closest
to $t_2$, a feasible path with the minimum
$P_1$ as the transmission path

select the feasible path
satisfying limiting
requirements as the
transmission path

405h

create a route table and store the
transmission path in the route table

End

## FIG.6

## INTERNATIONAL SEARCH REPORT

| | International application No. |
|---|---|
| | **PCT/CN2020/122525** |

**A.     CLASSIFICATION OF SUBJECT MATTER**

H04W 4/46(2018.01)i

According to International Patent Classification (IPC) or to both national classification and IPC

**B.     FIELDS SEARCHED**

Minimum documentation searched (classification system followed by classification symbols)

H04W,H04L

Documentation searched other than minimum documentation to the extent that such documents are included in the fields searched

Electronic data base consulted during the international search (name of data base and, where practicable, search terms used)

CNABS; CNTXT; CNKI; VEN; WOTXT; EPTXT; USTXT: 应急, 救灾, 抢险, 通信, 自组织网络, 自组网, 车载, 手持, 背负, 固定, 静态, 移动, 动态, 节点, 设备, 终端, emergency, disaster, succor, communication, Ad-hoc, vehicle, knapsack, handheld, fix, static, mobile, dynamic, node, device, terminal

**C.     DOCUMENTS CONSIDERED TO BE RELEVANT**

| Category* | Citation of document, with indication, where appropriate, of the relevant passages | Relevant to claim No. |
|---|---|---|
| PX | CN 110572797 A (XIDIAN UNIVERSITY) 13 December 2019 (2019-12-13) description, paragraphs 5-76 | 1-13 |
| X | 彭帜 (PENG, Zhi). "应急通信中基站自组织网络路由算法研究 (Research on Routing Algorithm of Self-organizing Network for Base Stationin Emergency Communication Full-text in Chinese)" 中国优秀硕士学位论文全文数据库 信息科技辑 (*Information Science and Technology, Chinese Master's Theses Full-Text Database*), No. 04, 15 April 2018 (2018-04-15), main body, chapter 3, figure 3.1 | 1-8 |
| X | CN 105873088 A (CHONGQING UNIVERSITY OF POSTS AND TELECOMMUNICATIONS) 17 August 2016 (2016-08-17) description, paragraphs 5-94 | 1-8 |
| X | CN 104002719 A (HEBEI SANJIA ELECTRONIC CO., LTD.) 27 August 2014 (2014-08-27) description, paragraphs 30-80 | 1-8 |
| X | CN 109831772 A (SHANGHAI SCIFINE INTERNET OF THINGS TECHNOLOGY CO., LTD.) 31 May 2019 (2019-05-31) description, paragraphs 24-58 | 1-8 |

☑ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **22 December 2020** | **19 January 2021** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088 China** | |
| Facsimile No. **(86-10)62019451** | Telephone No. |

Form PCT/ISA/210 (second sheet) (January 2015)

**INTERNATIONAL SEARCH REPORT**

| International application No. |
|---|
| **PCT/CN2020/122525** |

**C.**     **DOCUMENTS CONSIDERED TO BE RELEVANT**

| Category* | Citation of document, with indication, where appropriate, of the relevant passages | Relevant to claim No. |
|---|---|---|
| A | CN 105578422 A (BEIJING JIAOTONG UNIVERSITY) 11 May 2016 (2016-05-11) <br> entire document | 1-13 |
| A | CN 103578228 A (SHAANXI EYINHE ELECTRONIC CO., LTD.) 12 February 2014 (2014-02-12) <br> entire document | 1-13 |
| A | KR 20180069685 A (JEJU NATIONAL UNIV INDUSTRY ACADEMIC COOPERATION FOUNDATION) 25 June 2018 (2018-06-25) <br> entire document | 1-13 |
| A | US 2019222470 A1 (CABLE TELEVISION LABORATORIES, INC.) 18 July 2019 (2019-07-18) <br> entire document | 1-13 |

Form PCT/ISA/210 (second sheet) (January 2015)

**INTERNATIONAL SEARCH REPORT**
Information on patent family members

International application No.

**PCT/CN2020/122525**

| Patent document cited in search report | | | Publication date (day/month/year) | Patent family member(s) | | | Publication date (day/month/year) |
|---|---|---|---|---|---|---|---|
| CN | 110572797 | A | 13 December 2019 | None | | | |
| CN | 105873088 | A | 17 August 2016 | CN | 105873088 | B | 02 April 2019 |
| CN | 104002719 | A | 27 August 2014 | CN | 104002719 | B | 24 August 2016 |
| CN | 109831772 | A | 31 May 2019 | None | | | |
| CN | 105578422 | A | 11 May 2016 | CN | 105578422 | B | 28 December 2018 |
| CN | 103578228 | A | 12 February 2014 | CN | 103578228 | B | 25 August 2017 |
| KR | 20180069685 | A | 25 June 2018 | KR | 102009987 | B1 | 21 October 2019 |
| US | 2019222470 | A1 | 18 July 2019 | None | | | |

Form PCT/ISA/210 (patent family annex) (January 2015)